# EUROPÄISCHE PATENTSCHRIFT

(11) **EP 2 369 399 B1**
(45) Veröffentlichungstag und Bekanntmachung des Hinweises auf die Patenterteilung: **14.10.2015**
(21) Anmeldenummer: 11001138.4
(22) Anmeldetag: 11.02.2011
(51) Int. Cl.: G02B 26/02, G09G 3/34

(54) **Mehrfarbige Anzeigevorrichtung**
Multi-coloured display device
Dispositif d'affichage multicolore

(30) Priorität: 27.03.2010 DE 102010013153
(43) Veröffentlichungstag der Anmeldung: 28.09.2011
(73) Patentinhaber: advanced display technology AG, 9050 Appenzell (CH)
(72) Erfinder: Müller-Marc, Oliver, 9050 Appenzell (CH); Jerosch, Dieter, 65812 Bad Soden (DE); Bitman, Andriy, Dipl.-Ing., 44309 Dortmund (DE); Bartels, Frank, Dr., 45527 Hattingen (DE)
(74) Vertreter: Angerhausen, Christoph

(56) Entgegenhaltungen:
- DE-A1-102006 050 404
- US-A- 5 956 005
- US-A1- 2006 132 404
- ZHOU K ET AL: "Arrayed electrowetting microwells", APPLIED PHYSICS LETTERS, AMERICAN INSTITUTE OF PHYSICS, US, vol. 92, no. 11, 20 March 2008 (2008-03-20), pages 113515-113515, XP012106088, ISSN: 0003-6951, DOI: 10.1063/1.2898890

## Beschreibung

Die Erfindung betrifft eine Anzeigevorrichtung mit zumindest einem elektrisch ansteuerbaren Anzeigeelement entsprechend Anspruch 1.

Die DE 10 2006 050 404 A1 beschreibt eine Anzeigevorrichtung mit zumindest einem elektrisch ansteuerbaren Anzeigeelement, bei der eine Farbflüssigkeit und ein farbloses Fluid mittels Mikropumpen, Elektrophorese, Elektrowetting, Bubble Pumps, Luftdruck oder dergleichen von einem hinter Farbspiegeln befindlichen Reservoir zum Farbspiegel und zurück bewegt werden. Es wird somit ein bistabiles System beschrieben, bei dem für beide Flüssigkeitsbewegungsrichtungen zwischen einem einsehbaren Volumen und dem Reservoir die vorgenannten Hilfsmittel benötigt werden.

Die US 2006/0132404 A1 beschreibt eine weitere gattungsgemäße Anzeigevorrichtung, bei der hydrophil und hydrophob beschichtete Elektroden verwendet werden, wobei erst durch eine entsprechende Potentialbeaufschlagung der Elektrode die farbige elektrisch leitende oder polare Flüssigkeit von der hydrophilen Elektrode gelöst und in das einsehbare Volumen getrieben werden kann. Der Rücktransport der polaren Flüssigkeit aus dem einsehbaren Teilvolumen in das Reservoir erfolgt nach Abbruch der Potentialbeaufschlagung der Elektrode 7 aufgrund deren hydrophiler Eigenschaften.

Es ist bekannt, Anzeigen mit Hilfe von farbigen Flüssigkeiten zu realisieren, wozu diese zwischen für einen Betrachter nicht einsehbaren und einsehbaren Positionen verlagert werden können. Ein effizientes Mittel für die Verlagerung der Flüssigkeiten ist das sogenannte Elektrowetting, bei dem eine sich in unmittelbarer Nachbarschaft des Flüssigkeitstropfens befindliche Elektrodenanordnung mit einer Spannung beaufschlagt wird, wodurch ein elektrisches Feld auf den Flüssigkeitstropfen einwirkt, infolge welches sich die Oberflächenenergie und damit die Oberflächenspannung der Flüssigkeit erhöht. Dies kann je nach Anordnung dazu führen, dass sich die Flüssigkeit auf der Elektrode ausbreitet, oder diese sogar vollständig bedeckt, je nachdem welche Geometrie und Oberflächenbeschaffenheit die Elektrode aufweist und in welcher relativen Lage sich die Flüssigkeit und die Elektrode auch bezüglich des Erdgravitationsfeldes befinden. Es ist bekannt, die Elektroden mit einer hydrophoben Beschichtung zu versehen, um auf diese Weise einen maximalen Effekt zwischen dem Zustand der Flüssigkeit bei nicht beaufschlagter Elektrode und beaufschlagter Elektrode zu erzielen. Bereits mit den vorgenannten Mitteln ist es möglich, eine Tropfenbewegung zu realisieren, ohne dabei auf weitere funktionale Elemente zurückgreifen zu müssen.

Die Änderung der Oberflächenenergie zieht im Falle eines einzelnen Tropfens eine Änderung des Kontaktwinkels nach sich, mit welchem der Tropfen die Unterlage benetzt. Der Zusammenhang zwischen der Feldstärke und der Änderung des Kontaktwinkels wird durch die Lippman-Young-Gleichung beschrieben und ist dem Fachmann bekannt.

Durch eine lokale Variation der elektrischen Feldstärke kann demnach die lokale Oberflächenenergie der Flüssigkeit modifiziert und somit die Geometrie eines Tropfens lokal verändert werden. Insbesondere kann durch das Erzeugen einer lokal erhöhten Oberflächenenergie eine Bewegung des Tropfens erfolgen, indem sich dieser bevorzugt in den entsprechenden, durch das Vorhandensein eines elektrischen Feldes gekennzeichneten Bereich ausdehnt. Umgekehrt wird Flüssigkeit aus dem Bereich, in dem sie unbeeinflusst ist und somit eine geringere Oberflächenenergie aufweist, von dem beeinflussten Teil des Tropfens aufgrund der Oberflächenspannung hinterhergezogen, da sie in diesem Bereich der energieärmsten Geometrie, nämlich der einer Kugel, zustrebt. Daraus resultiert ein Nettotransport von Flüssigkeit aus dem Bereich geringer in den Bereich hoher Feldstärke.

Auf dieser Grundlage sind bereits eine Vielzahl unterschiedlicher Anzeigen realisiert worden. Üblicherweise war es dabei stets das Ziel, ein elektronisch steuerbares bistabiles Anzeigeelement zu erzeugen, welches wahlweise den einen oder den anderen Zustand einnimmt. So ist es beispielsweise bekannt, eine Flüssigkeit zwischen einem ersten und einem zweiten Volumen, welche über einen Kanal miteinander verbunden sind, mit Hilfe des Elektrowettingeffektes hin- und herzutransportieren, wozu jedes Volumen eine beigeordnete Elektrode aufweist, so dass sich die Transportrichtung jeweils aus dem Feldstärkenverhältnis zwischen beiden Elektroden ergibt. Vorzugsweise wird jeweils nur diejenige Elektrode mit einem Potential beaufschlagt, in deren Richtung die Flüssigkeit transportiert werden soll.

Die US 5,956,005 A offenbart eine Anzeigevorrichtung mit zumindest einem elektrisch ansteuerbaren Anzeigeelement, von denen jedes eine Mehrzahl fluidisch abgeschlossener Volumina aufweist, in denen sich genau eine Flüssigkeit mit einem elektrisch leitenden oder polaren Anteil und einem unpolaren Anteil befindet. Des Weiteren sind einsehbare Teilvolumina offenbart, die flächig ausgebildet sind und übereinander gestapelt vorliegen.

Aus der WO 2009/036272 A1 ist eine elektrowetting-basierte Anzeigevorrichtung bekannt, bei der jedem Anzeigepixel ein Elektrodenpaar, das einen Kondensator ausbildet, zugeordnet ist, mit Hilfe welches eine Flüssigkeit, die sich in dem einsehbaren Volumen des Pixels befindet, mit einem elektrischen Feld beaufschlagbar ist. Ein Rücktransport der polaren oder elektrisch leitenden Flüssigkeit in ein Reservoir, welches sich in Blickrichtung auf das Anzeigeelement unterhalb der einsehbaren Anzeigefläche befindet, wird dadurch erreicht, dass die Geometrien des einsehbaren Anzeigevolumens und die des Reservoirs derart aufeinander abgestimmt werden, dass die polare oder elektrisch leitende Flüssigkeit, wenn sie nicht von einem elektrischen Feld beaufschlagt ist, aufgrund des Young-Laplace-Druckes in das Reservoir gedrängt wird.

Wollte man mit Hilfe der vorbenannten Technologie ein mehrfarbiges Display realisieren, so wäre dies nur mit Hilfe einer Vielzahl auf der Anzeigefläche nebeneinander angeordneter Pixel, welche unterschiedlich gefärbte Flüssigkeiten aufweisen, möglich. Es ist jedoch nicht möglich, die Vorrichtung gemäß der WO 2009/036272 A1 derart zu betreiben, dass ein einziges Pixel mehr als zwei Farbzustände einnehmen kann. Insbesondere ist es auch nicht möglich, Mischfarben aus zumindest zwei unterschiedlich gefärbten Flüssigkeiten und mit Hilfe eines einzigen Pixels darzustellen.

Es ist die Aufgabe der Erfindung, die eingangs beschriebene Anzeigevorrichtung derart weiterzuentwickeln, dass sie ein schnelles und gleichmäßiges Auffüllen der einsehbaren Teilvolumina ermöglicht. Diese Aufgabe wird erfindungsgemäß durch eine Anzeigevorrichtung gemäß Patentanspruch 1 gelöst. Vorteilhafte Ausführungsformen sind Gegenstand der abhängigen Ansprüche.

Eine erfindungsgemäße Anzeigevorrichtung zeichnet sich dadurch aus, dass das zweite Teilvolumen, das in Blickrichtung auf das Anzeigeelement dem obersten ersten Teilvolumen zugeordnet ist, als ein Topf ausgebildet ist, der um den Symmetriepunkt des obersten ersten Teilvolumen herum ausgebildet ist, wobei zumindest ein weiteres der fluidisch abgeschlossenen Volumina in ein tiefergelegenes, flächiges, einsehbares Teilvolumen und zumindest zwei zweite Teilvolumina unterteilt ist, die dezentral zu dem Symmetriepunkt angeordnet sind.

Ausgehend vom zitierten Stand der Technik wird der Fachmann erkennen, dass die erfindungsgemäß vorgesehene flächige Ausbildung der einsehbaren Teilvolumina insbesondere derart zu verstehen ist, dass die für die Funktionalität der vorgeschlagenen Anzeigevorrichtung notwendige Young-Laplace-Druck-Beaufschlagung des elektrisch leitenden oder polaren Flüssigkeitsanteils gewährt ist, wenn dieser sich in dem einsehbaren Teilvolumen befindet und nicht von einem elektrischen Feld beeinflusst wird. Darüber hinaus wird der Fachmann wissen, dass er bei der Auslegung des flächigen einsehbaren Teilvolumens und insbesondere seiner kürzesten Dimension im Hinblick auf die Nutzbarmachung des Young-Laplace-Druckes auch die Dimensionierung des jeweiligen zweiten Teilvolumens zu berücksichtigen bzw. beide Teilvolumina aufeinander abzustimmen hat.

Zur Realisierung eines vollfarbigen Displays kann es vorgesehen sein, dass das Anzeigeelement drei fluidisch abgeschlossene Volumina aufweist, von denen jedes genau eine Cyan-, Magenta-, oder Gelb-gefärbte Flüssigkeit beinhaltet, welche zweckmäßiger Weise den elektrisch leitenden oder polaren Anteil der Flüssigkeit darstellt, während der unpolare Anteil der Flüssigkeit vorzugsweise transparent ausgeführt ist. Sind die Spannungsquelle und die Elektrodenanordnung derart ausgebildet, dass mit Hilfe dieser die einzelnen ersten Teilvolumina separat und unabhängig voneinander ansteuerbar sind, so können die Farbtöne aus dem CMY-Farbraum entsprechend dem subtraktiven Farbmodell durch die Überlagerung der entsprechenden Flüssigkeiten gebildet werden. Sind die ersten Teilvolumina, wie erfindungsgemäß vorgesehen, unmittelbar übereinander gestapelt angeordnet, so propagiert das auf die Anzeigevorrichtung einfallende (weiße) Licht durch alle drei ersten Teilvolumina hindurch, wird entsprechend den in den ersten Teilvolumina vorhandenen farbigen Flüssigkeiten gefiltert und von einem Reflektor, der sich in Lichtpropagationsrichtung hinter dem tiefstgelegenen ersten Teilvolumen befindet, zurückreflektiert.

Es wird bevorzugt, dass die zweiten Teilvolumina in Summe ein Gesamtvolumen aufweisen, das ausreicht, um entweder den elektrisch leitenden oder polaren, oder den unpolaren Flüssigkeitsanteil vollständig aufzunehmen. Die Verwendung von mehreren zweiten Teilvolumina kann insbesondere dann zweckmäßig sein, wenn großflächige erste Teilvolumina möglichst zügig und gleichmäßig befüllt und entleert werden sollen.

Es kann sinnvoll sein, tiefergelegene Lagen in mehrere Volumina zu unterteilen, welche beispielsweise gleichzeitig ansteuerbar sind und eine identische Farbfilterung bedienen.

Die farbfilternden Schichten einer erfindungsgemäßen Anzeigevorrichtung können somit prinzipiell auf zwei verschiedene Arten und Weisen ausgeführt sein. Zum einen kann für eine Schicht ein einziges erstes Teilvolumen vorgesehen sein, das entweder mit einem oder mehreren zweiten Teilvolumina fluidisch in Verbindung steht. Die zweite Möglichkeit ist es, eine farbgebende Schicht aus mehreren Volumina zusammenzusetzen, wobei jedes Volumen wiederum, wie erfindungsgemäße vorgesehen, aus einem ersten Teilvolumen und zumindest einem zweiten Teilvolumen besteht.

Gemäß einer weiteren Ausführungsform sind die zweiten Teilvolumina zumindest im Durchtrittsbereich durch untergeordnete Teilvolumina als Kanal ausgeführt. Dies kann dazu vorgesehen sein, um die Beeinträchtigung der Anzeigevorrichtung durch das zweite Teilvolumen bzw. den darin enthaltenden Flüssigkeitsanteil so gering wie möglich zu halten. Dies kann beispielsweise dadurch realisiert sein, dass der Kanal das erste Teilvolumen mit einem Reservoir verbindet, welches sich unterhalb eines tiefstgelegenen ersten Teilvolumens befindet, wobei das Reservoir zusammen mit dem Kanal das jeweilige zweite Teilvolumen ausbildet.

Genauso ist es bei einer weiteren Ausführungsform möglich, dass zumindest ein zweites Teilvolumen ein Reservoir aufweist, das sich unterhalb eines tiefstgelegenen ersten Teilvolumens befindet und über zumindest zwei Kanäle mit dem zugeordneten ersten Teilvolumen fluidisch verbunden ist.

So ist es möglich, dass eine Stapelebene mehrere fluidisch voneinander getrennte erste Teilvolumina aufweist.

Beim Anlegen der elektrischen Spannung wird der elektrisch leitende oder polare Flüssigkeitsanteil aus dem jeweiligen zweiten Teilvolumen in das zugeordnete erste Teilvolumen hineingezogen. Damit dieser Vorgang ungestört realisiert werden kann, ist es zweckmäßig, den unpolaren Anteil der Flüssigkeit über Rückflusskanäle aus dem ersten Teilvolumen zu entfernen und in das zweite Teilvolumen zu überführen. Würde dieser Ausgleich zwischen den Flüssigkeitsanteilen nicht realisiert, entstünde ein hydraulischer Stau, der die Bewegung der Flüssigkeit hindert. So ist es bevorzugt vorgesehen, dass die ersten Teilvolumina Rückflusskanäle aufweisen, die in Form einer Vertiefung ausgeführt sind, welche sich innerhalb des ersten Teilvolumens entlang einer äußeren Berandung dieses erstreckt und an einer Stelle in das zweite Teilvolumen mündet.

Mit Hilfe der Vertiefung ist es gleichzeitig möglich, die Ausbreitung der Flüssigkeit innerhalb des ersten Teilvolumens zu begrenzen. So ist es gemäß einer weiteren Ausführungsform vorgesehen, dass ein erstes Teilvolumen zumindest zwei Rückflusskanäle aufweist, die in Form einer Vertiefung ausgeführt sind, welche sich innerhalb des ersten Teilvolumens erstrecken, wobei jede Vertiefung einem anderen zweiten Teilvolumen zugeordnet ist und einen geschlossenen Bereich um einen Übergang von dem ersten Teilvolumen zu dem zugeordneten zweiten Teilvolumen abgrenzt. Bei dieser Ausführungsform ist es beispielsweise möglich, die unpolaren Flüssigkeitsanteile sämtlicher erster Teilvolumina einer Farbebene mit einem gemeinsamen Reservoir zu verknüpfen.

Bei einer weiteren Ausführungsform sind zumindest zwei zweite Teilvolumina über einen Kanal miteinander fluidisch verbunden.

Besonders bevorzugt ist es vorgesehen, dass die ersten Teilvolumina zwischen transparenten Trennwänden ausgebildet sind, welche durch Stützstrukturen auf einem vorgegebenen Abstand zueinander gehalten werden.

Die besonders bevorzugten Ausführungsformen der Erfindung werden anhand der nachfolgenden Figuren beschrieben. Dabei zeigt:
- Figur 1a: eine schematische Draufsicht auf ein erfindungsgemäßes Anzeigeelement;
- Figur 1b: eine Querschnittsansicht des Anzeigeelements gemäß Figur 1a entlang einer ersten Linie;
- Figur 1c: eine Querschnittsansicht des Anzeigeelements gemäß Figur 1a entlang einer zweiten Linie;
- Figur 2a: ein perspektivische Ansicht eines erfindungsgemäßen Anzeigeelements;
- Figur 2b: eine Draufsicht auf das Anzeigeelement gemäß Figur 2a;
- Figur 2c: eine Querschnittsansicht des Anzeigeelements gemäß den Figuren 2a und 2b entlang einer ersten Linie;
- Figur 2d: eine Querschnittsansicht des Anzeigeelements gemäß Figur 2a und 2b entlang einer zweiten Linie;
- Figur 3a: eine perspektivische Ansicht einer weiteren Ausführungsform des erfindungsgemäßen Anzeigeelements;
- Figur 3b: eine Draufsicht auf das Anzeigeelement gemäß Figur 3a;
- Figur 3c: eine Querschnittansicht des Anzeigeelements gemäß den Figuren 3a und 3b entlang einer ersten Linie; und
- Figur 3d: eine Querschnittsansicht des Anzeigeelements gemäß Figur 3a und 3b entlang einer zweiten Linie.

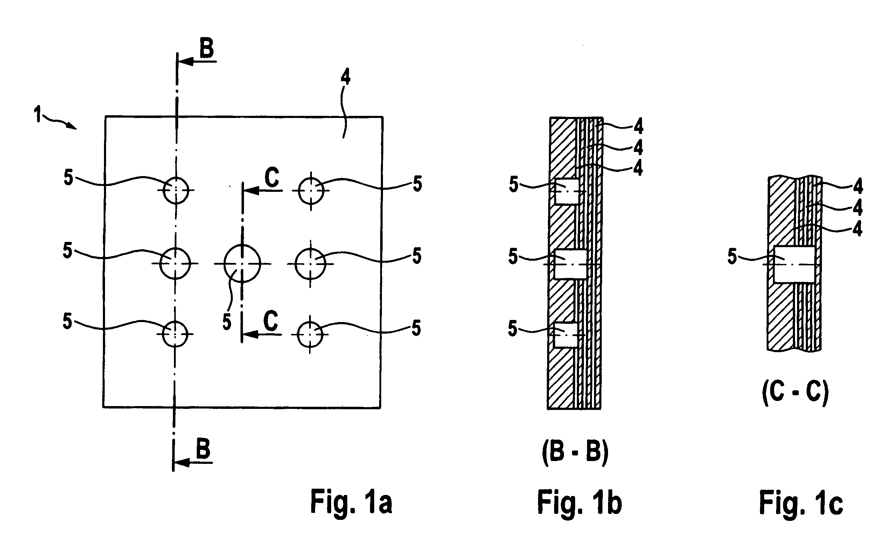

Figur 1a zeigt eine schematische Draufsicht auf eine erste Ausführungsform des erfindungsgemäßen Anzeigeelements 1. In der Draufsicht sind die ersten Teilvolumina 4 einsehbar und weisen dazu transparente Zwischenschichten auf. Ebenfalls dargestellt sind die zweiten Teilvolumina 5, wobei die dargestellte Ausführungsform vorsieht, dass dem in Blickrichtung oben liegenden ersten Teilvolumen 4 genau ein zweites Teilvolumen 5, welches in der Darstellung zentral angeordnet ist, zugeordnet ist, während einem mittleren ersten Teilvolumen 4, welches unterhalb des oberen ersten Teilvolumens 4 angeordnet ist, zwei zweite Teilvolumina 5 zugeordnet sind. Dem tiefstgelegenen ersten Teilvolumen 4 sind vier zweite Teilvolumina 5 zugeordnet. Folglich erfolgt der Flüssigkeitsaustausch bei dem oberen ersten Teilvolumen 4 mit genau einem zweiten Teilvolumen 5, so dass dieses zweckmäßigerweise ein identisches Fassungsvermögen aufweist. Bei der mittleren Schicht ist das erste Teilvolumen 4 an zwei zweite Teilvolumina 5 aufgeteilt, wobei jedes zweckmäßigerweise das halbe Fassungsvermögen des zugeordneten ersten Teilvolumens 4 aufweist. Bei dem untersten ersten Teilvolumen 4 teilt sich die Flüssigkeit auf vier zweite Teilvolumina 5 auf, von denen jedes ein Viertel des Fassungsvermögens des zugeordneten ersten Teilvolumens 4 aufweist.

In der Figur 1b ist eine Querschnittsansicht des Anzeigeelements gemäß Figur 1a entlang der Linie B-B dargestellt. Neben den drei ersten Teilvolumina 4 sind auch zwei der zweiten Teilvolumina 5, welche mit dem tiefstgelegenen ersten Teilvolumen 4 fluidisch in Verbindung stehen, dargestellt, während das in der Darstellung zentrale zweite Teilvolumen 5 eines der zwei zweiten Teilvolumina 5 gemäß Figur 1a ist, welche mit dem mittleren ersten Teilvolumen 4 fluidisch in Verbindung stehen. In der Querschnittsansicht C-C gemäß Figur 1c ist auch das zweite Teilvolumen 5 zu erkennen, welches mit dem obersten ersten Teilvolumen 4 fluidisch in Verbindung steht und, da es das einzige zweite Teilvolumen 5 ist, welches mit dem obersten ersten Teilvolumen 4 in Verbindung steht, ist dieses, wie durch seinen Querschnitt angedeutet, das mit dem größten Fassungsvolumen, wie es eine Zusammenschau der Figuren 1b und 1c andeutet.

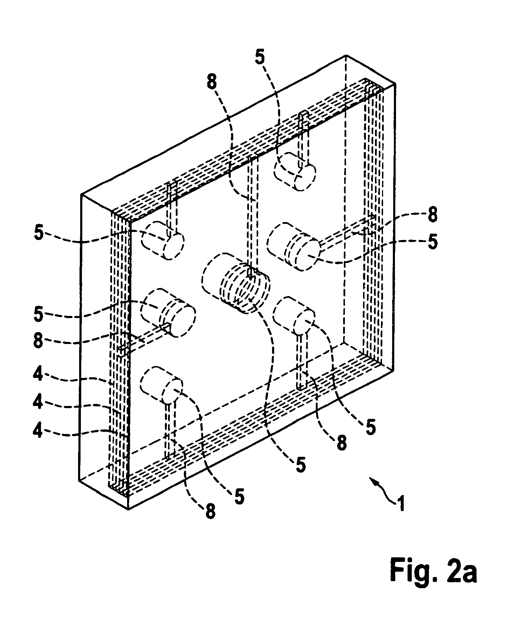

In den Figuren 2a bis 2d ist eine weitere Ausführungsform des erfindungsgemäßen Anzeigeelements 1 dargestellt. Figur 2a ist eine perspektivische Ansicht von vorne auf das Anzeigeelement 1. Neben den ersten und zweiten Teilvolumina 4, 5 sind auch Rückflusskanäle 8 zu erkennen, welche sich von einer äußeren Berandung des jeweiligen ersten Teilvolumens 4 zu einem zugeordneten zweiten Teilvolumen erstrecken. Wie bereits mit Bezug auf die Figuren 1a bis 1c beschrieben, ist auch bei dieser Ausführungsform vorgesehen, dass dem in Blickrichtung auf das Anzeigeelement oben gelegenen ersten Teilvolumen 4 genau ein zweites Teilvolumen 5, dem mittleren ersten Teilvolumen 4 genau zwei zweite Teilvolumina 5 und dem untersten ersten Teilvolumen 4 genau vier zweite Teilvolumina 5 zugeordnet sind.

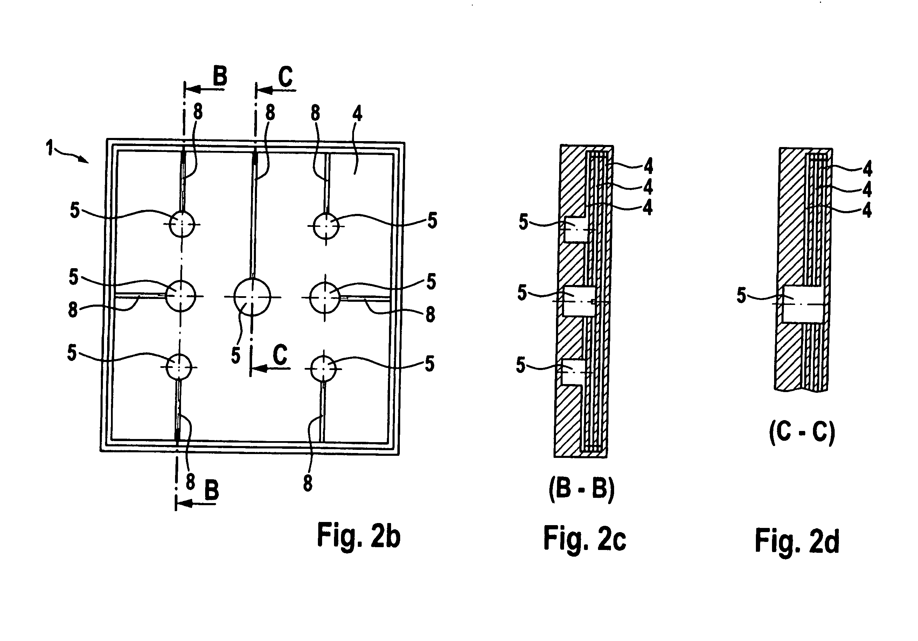

In der Draufsicht gemäß Figur 2b sind noch einmal die Kanäle 8 deutlich zu erkennen, welche auf einem kürzesten Weg zwischen der Berandung des jeweiligen ersten Teilvolumens 4 das oder eines der dem jeweiligen ersten Teilvolumen 4 zugeordnete Teilvolumen 5 auf kürzestem Wege fluidisch anbindet.

Die Querschnittsansichten der Figuren 2c und 2d zeigen wiederum die erfindungsgemäße Anordnung der zweiten Teilvolumina 5 gleicher und unterschiedlicher Ebenen, wobei die flächigen einsehbaren Teilvolumina 4 entlang ihrer kürzesten Dimension übereinander gestapelt vorliegen und die zweiten Teilvolumina 5 durch diejenigen flächigen einsehbaren Teilvolumina 4 hindurchtreten, welche demjenigen flächigen einsehbaren Teilvolumen 4 untergeordnet sind, dem das jeweilige zweite Teilvolumen 5 zugeordnet ist.

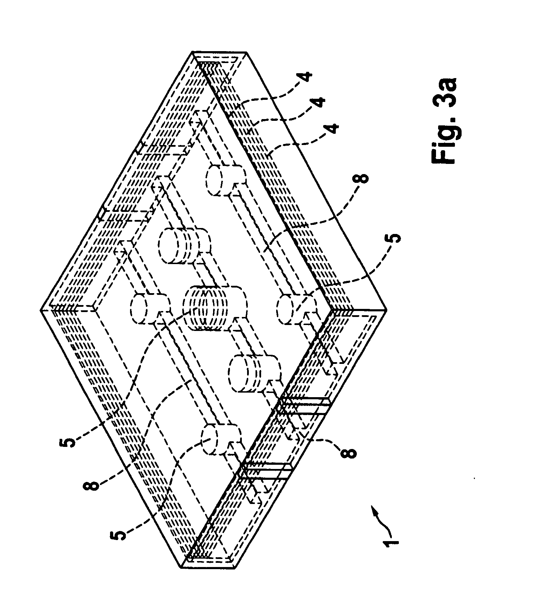

Bei der Ausführungsform gemäß den Figuren 3a bis 3d, welche wiederum einen dreischichtigen Aufbau betrifft, sind die zweiten Teilvolumina 5, welche dem mittleren ersten Teilvolumen 4 zugeordnet sind, mit dem zweiten Teilvolumen 5, welches dem oberen ersten Teilvolumen 4 zugeordnet ist, über gemeinsame Rückflusskanäle 8 fluidisch miteinander verbunden. Das gleiche gilt für jeweils zwei zweite Teilvolumina 5, welche dem untersten ersten Teilvolumen 4 zugeordnet sind.

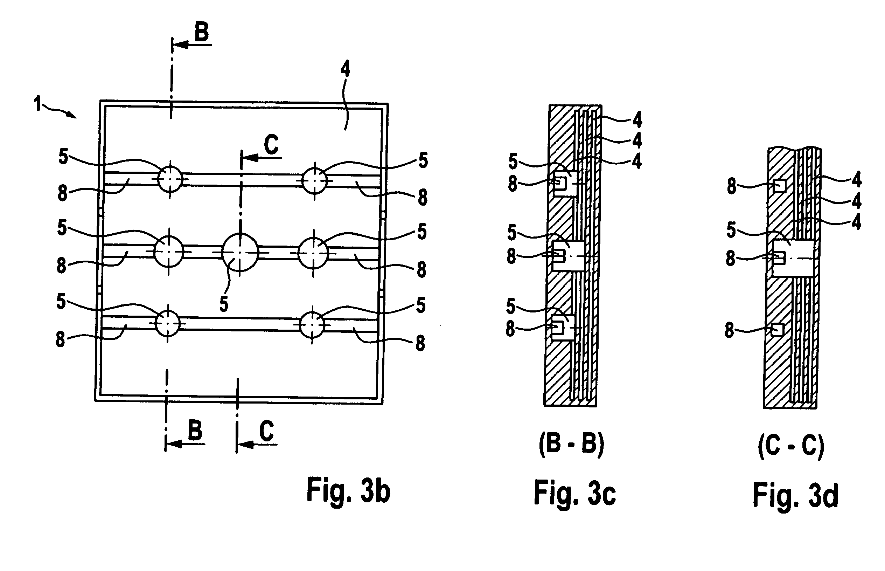

Der Figur 3b ist zu entnehmen, dass dies in einer Weise ausgeführt sein soll, dass jeweils in einer Zeile liegende zweite Teilvolumina 5 über durchgehende Kanäle 8 miteinander fluidisch verbunden sind, was insbesondere auch den Vorteil hat, dass das Anzeigeelement 1 gemäß den Figuren 3a bis 3d besonders einfach mit weiteren Anzeigeelementen 1 gleicher Art kombiniert werden kann, unter fluidischer Anbindung der Kanäle 8 jeweils benachbarter Anzeigeelemente 1. Genauso können auch einige oder sämtliche Teilvolumina 5 fluidisch miteinander verbunden sein.

Den Figuren 3c und 3d sind wiederum Querschnittsansichten zu entnehmen, wobei in der Figur 3d auch die Rückflusskanäle 8 dargestellt sind, welche die zweiten Teilvolumina 5, welche dem untersten ersten Teilvolumen zugeordnet sind, fluidisch miteinander verbinden.

Beispielhaft besteht keine Einschränkung bezüglich der Anordnung der zweiten Teilvolumina 5 . So ist es möglich, diese exemplarisch unmittelbar am Rand eines Anzeigeelementes 1 anzuordnen.

## Patentansprüche

1. Anzeigevorrichtung mit zumindest einem elektrisch ansteuerbaren Anzeigeelement (1), das aufweist:
- eine erste Flüssigkeit, die einen unpolaren Anteil (7) aufweist und zumindest eine weitere Flüssigkeit (2), die einen elektrisch leitenden oder polaren Anteil (6) aufweist, wobei die erste und die zumindest eine weitere Flüssigkeit (2) räumlich getrennt voneinander vorliegen und wobei sich die Anteile (6, 7) nicht untereinander mischen;
- eine Mehrzahl fluidisch abgeschlossener Volumina, von denen jedes genau eine der weiteren Flüssigkeiten (2), die einen elektrisch leitenden oder polaren Anteil (6) aufweist, und eine erste Flüssigkeit, die einen unpolaren Anteil (7) aufweist, beinhaltet und in ein erstes und zumindest ein zweites Teilvolumen (4, 5) unterteilt ist, die fluidisch miteinander verbunden sind, von denen das erste Teilvolumen (4) einsehbar ausgeführt und flächig ausgebildet ist, wobei der unpolare Anteil (7) in dem zweiten Teilvolumen (5) vorgehalten wird, wenn sich der elektrisch leitende oder polare Anteil (6) in dem ersten Teilvolumen (4) befindet, und umgekehrt, und wobei die flächigen einsehbaren Teilvolumina (4) entlang ihrer kürzesten Dimension übereinander gestapelt vorliegen,
- zumindest eine Spannungsquelle, die an einer Elektrodenanordnung anliegt und die darauf ausgelegt ist, wahlweise zumindest eines der einsehbaren Teilvolumina (4) mit einem elektrischen Feld zu durchsetzen und somit die Oberflächenspannung des polaren Flüssigkeitsanteils (6) zu variieren;
wobei die Dimensionen der flächigen einsehbaren Teilvolumina (4) derart ausgewählt sind, dass der jeweilige elektrisch leitende oder polare Flüssigkeitsanteil (6) im spannungslosen Zustand der jeweiligen Elektrodenanordnung aufgrund des Young-Laplace-Druckes in das jeweilige zweite Teilvolumen (5) verdrängt wird; und
wobei die zweiten Teilvolumina (5) durch diejenigen flächigen einsehbaren Teilvolumina (4) hindurchtreten, welche in Blickrichtung auf das Anzeigeelement (1) demjenigen flächigen einsehbaren Teilvolumen (4) untergeordnet sind, dem das jeweilige zweite Teilvolumen (5) zugeordnet ist,
**dadurch gekennzeichnet, dass** das zweite Teilvolumen (5), das in Blickrichtung auf das Anzeigeelement (1) dem obersten ersten Teilvolumen (4) zugeordnet ist, als ein Topf ausgebildet ist, der um den Symmetriepunkt des obersten ersten Teilvolumen (4) herum ausgebildet ist, wobei zumindest ein weiteres der fluidisch abgeschlossenen Volumina in ein tiefergelegenes, flächiges, einsehbares Teilvolumen (4) und zumindest zwei zweite Teilvolumina (5) unterteilt ist, die dezentral zu dem Symmetriepunkt angeordnet sind.

2. Anzeigevorrichtung nach Anspruch 1, **dadurch gekennzeichnet, dass** die zweiten Teilvolumina (5) in Summe ein Gesamtvolumen aufweisen, das ausreicht, um entweder den elektrisch leitenden oder polaren oder den unpolaren Flüssigkeitsanteil (6, 7) vollständig aufzunehmen.

3. Anzeigevorrichtung nach Anspruch 1, **dadurch gekennzeichnet, dass** die zweiten Teilvolumina (5) zumindest im Durchtrittsbereich durch untergeordnete Teilvolumina (4) als Kanal ausgeführt sind.

4. Anzeigevorrichtung nach Anspruch 3, **dadurch gekennzeichnet, dass** der Kanal unterhalb eines tiefstgelegenen ersten Teilvolumen (4) in ein Reservoir mündet, welches zusammen mit dem Kanal ein zweites Teilvolumen (5) ausbildet.

5. Anzeigevorrichtung nach Anspruch 1, **dadurch gekennzeichnet, dass** zumindest ein zweites Teilvolumen (5) ein Reservoir aufweist, das sich unterhalb eines tiefstgelegenen ersten Teilvolumens (4) befindet und über zumindest zwei Kanäle mit dem zugeordneten ersten Teilvolumen (5) fluidisch verbunden ist.

6. Anzeigevorrichtung nach Anspruch 1, **dadurch gekennzeichnet, dass** eine Stapelebene mehrere fluidisch voneinander getrennte erste Teilvolumina (4) aufweist.

7. Anzeigevorrichtung nach Anspruch 1, **dadurch gekennzeichnet, dass** die ersten Teilvolumina (4) Rückflusskanäle aufweisen, die in Form einer Vertiefung ausgeführt sind, welche sich innerhalb des ersten Teilvolumens (4) entlang einer äußeren Berandung dieses erstreckt und an einer Stelle in das zweite Teilvolumen (5) mündet.

8. Anzeigevorrichtung nach Anspruch 1, **dadurch gekennzeichnet, dass** ein erstes Teilvolumen (4) zumindest zwei Rückflusskanäle aufweist, die in Form von Vertiefungen ausgeführt sind, welche sich innerhalb des ersten Teilvolumens (4) erstrecken, wobei jede Vertiefung einem anderen zweiten Teilvolumen (5) zugeordnet ist und einen Bereich um einen Übergang von dem ersten Teilvolumen (4) zu dem zugeordneten zweiten Teilvolumen (5) umschließt.

9. Anzeigevorrichtung nach Anspruch 7 oder 8, **dadurch gekennzeichnet, dass** zumindest zwei der zweiten Teilvolumina (5) über einen Kanal miteinander fluidisch verbunden sind.

10. Anzeigevorrichtung nach Anspruch 1, **dadurch gekennzeichnet, dass** die ersten Teilvolumina (4) zwischen transparenten Trennwände ausgebildet sind, welche durch Stützstrukturen auf einem vorgegebenen Abstand gehalten werden.

## Claims

1. Display device with at least one electrically controllable display element (1), comprising:
- a first fluid comprising a non-polar fraction (7) and at least one other fluid (2) comprising an electrically conducting or polar fraction (6), wherein the first and the at least one other fluid (2) are spatially separate from one another and wherein the fractions (6, 7) do not mix with one another,
- a plurality of fluidically closed volumes, each of which contains precisely one of the other fluids (2) comprising an electrically conducting or polar fraction (6), and a first fluid comprising a non-polar fraction (7) and is subdivided into a first and at least one second subvolume (4, 5) which are fluidically connected to one another, of which the first subvolume (4) is configured so that it is visible and flat, wherein the non-polar fraction (7) is held in the second subvolume (5) when the electrically conducting or polar fraction (6) is located in the first subvolume (4), and vice versa, wherein the visible flat subvolumes (4) are arranged stacked on one another along their shortest dimension,
- at least one voltage source which is in contact with an electrode array and adapted to selectively intersperse at least one of the visible subvolumes (4) with an electric field and thus to vary the surface tension of the polar fluid fraction (6);
wherein the dimensions of the flat visible subvolumes (4) are selected in such a manner that the respective electrically conducting or polar fluid fraction (6) in the deenergized state of the respective electrode array is forced into the respective second subvolume (5) due to the Young-Laplace pressure; and
wherein the second subvolumes (5) pass through the flat visible subvolumes (4) which are arranged, in the viewing direction onto the display element (1), under the flat visible subvolume (4) with which the respective second subvolume (5) is associated,
**characterized in that** the second subvolume (5) which is associated, in the viewing direction onto the display element (1), with the uppermost first subvolume (4) is configured as a part configured around the symmetry point of the uppermost first subvolume (4), wherein at least another of the fluidically closed volumes is subdivided into a lower-lying flat visible subvolume (4) and at least two second subvolumes (5) which are associated in a decentralized manner with the symmetry point.

2. Display device according to Claim 1, **characterized in that** the second subvolumes (5) in total have an overall volume which is sufficient to completely receive either the electrically conducting or polar or the non-polar fluid fraction (6, 7).

3. Display device according to Claim 1, **characterized in that** the second subvolumes (5) are configured as a duct at least in the passage area through underlying subvolumes (4).

4. Display device according to Claim 3, **characterized in that** the duct below the lowest first subvolume (4) leads to a reservoir which together with the duct forms a second subvolume (5).

5. Display device according to Claim 1, **characterized in that** at least one second subvolume (5) comprises a reservoir which is located below a lowest first subvolume (4) and which is fluidically connected to the associated first subvolume (5) via at least two ducts.

6. Display device according to Claim 1, **characterized in that** a stack plane comprises multiple first subvolumes (4) which are fluidically separated from one another.

7. Display device according to Claim 1, **characterized in that** the first subvolumes (4) comprise return flow ducts which are produced in the form of a depression which extends within the first subvolume (4) along an outer border of said subvolume and leads into the second subvolume (5) at one site.

8. Display device according to Claim 1, **characterized in that** a first subvolume (4) comprises at least two return flow ducts which are configured in the form of depressions extending within the first subvolume (4), wherein each depression is associated with another second subvolume (5) and encloses an area around a transition from the first subvolume (4) to the associated second subvolume (5).

9. Display device according to Claim 7 or 8, **characterized in that** at least two of the second subvolumes (5) are connected fluidically to one another via a duct.

10. Display device according to Claim 1, **characterized in that** the first subvolumes (4) are configured between transparent partitions which are kept at a predetermined separation distance by supporting structures.

## Revendications

1. Dispositif d'affichage avec au moins un élément d'affichage (1) pouvant être contrôlé de manière électrique, qui comprend :
- un premier liquide qui contient une partie non polaire (7) et au moins un autre liquide (2) qui contient une partie électro-conductrice ou polaire (6), le premier et l'au moins un autre liquide (2) étant physiquement séparés l'un de l'autre et les parties (6, 7) ne se mélangeant entre elles :
- une pluralité de volumes séparés de manière fluidique, dont chacun comprend exactement un des autres liquides (2) qui contient une partie électro-conductrice ou polaire (6) et un premier liquide qui contient une partie non polaire (7) et est divisé en un premier et au moins un deuxième volume partiel (4, 5), qui sont reliés de manière fluidique entre eux, le premier volume partiel (4) étant conçu de manière visible et plat, la partie non polaire (7) étant contenue dans le deuxième volume partiel (5) lorsque la partie électro-conductrice ou polaire (6) se trouve dans le premier volume partiel (4) et inversement et les volumes partiels (4) plats et visibles étant empilés les uns sur les autres le long de leur dimension la plus courte,
- au moins une source de tension disposée au niveau d'un dispositif à électrodes et qui est conçue de façon à appliquer sélectivement un champ électrique à un des volumes partiels visibles (4) et donc pour faire varier la tension de surface de la partie de liquide polaire (6) ;
les dimensions des volumes partiels plats (4) étant choisies de façon à ce que la partie de liquide électro-conductrice ou polaire (6) soit déplacée, dans l'état hors tension du dispositif à électrodes, du fait de la pression de Young-Laplace, vers le deuxième volume partiel (5) ; et
les deuxièmes volumes partiels (5) traversant les volumes partiels plats visibles (4) qui sont disposés, quand on regarde dans la direction de l'élément d'affichage (1), en dessous du volume partiel plat visible (4) correspondant au deuxième volume partiel (5),
**caractérisé en ce que** le deuxième volume partiel (5) qui correspond, quand on regarde dans la direction de l'élément d'affichage (1), au premier volume partiel (4) supérieur, est conçu comme un godet qui est formé autour du centre de symétrique du premier volume partiel (4) supérieur, au moins un autre des volumes séparés de manière fluidique étant divisé en un volume partiel plat visible (4) situé plus bas et au moins deux deuxièmes volumes partiels (5) disposés de manière excentrée par rapport au centre de symétrie.

2. Dispositif d'affichage selon la revendication 1, **caractérisé en ce que** les deuxièmes volumes partiels (5) représentent un volume total suffisant pour loger entièrement soit le partie de liquide électro-conductrice ou polaire soit la partie non polaire (6, 7).

3. Dispositif d'affichage selon la revendication 1, **caractérisé en ce que** les deuxièmes volumes partiels (5) sont constitués, au moins dans la zone de passage à travers des volumes partiels (4) situés en dessous, sous la forme d'un canal.

4. Dispositif d'affichage selon la revendication 3, **caractérisé en ce que** le canal débouche en dessous d'un premier volume partiel (4) situé le plus bas dans un réservoir qui forme, avec le canal, un deuxième volume partiel (5).

5. Dispositif d'affichage selon la revendication 1, **caractérisé en ce qu'**au moins un deuxième volume partiel (5) comprend un réservoir qui se trouve en dessous d'un premier volume partiel (4) situé le plus bas et est relié, de manière fluidique, par l'intermédiaire d'au moins deux canaux, avec le premier volume partiel (5) correspondant.

6. Dispositif d'affichage selon la revendication 1, **caractérisé en ce qu'**un plan d'empilement comprend plusieurs volumes partiels (4) séparés de manière fluidique entre eux.

7. Dispositif d'affichage selon la revendication 1, **caractérisé en ce que** les premiers volumes partiels (4) comprennent des canaux de retour qui sont conçus sous la forme d'un creux qui s'étend à l'intérieur du premier volume partiel (4) le long d'une bordure externe de celui-ci et débouche à un endroit dans le deuxième volume partiel (5).

8. Dispositif d'affichage selon la revendication 1, **caractérisé en ce qu'**un premier volume partiel (4) comprend au moins deux canaux de retour qui sont conçus sous la forme de creux qui s'étendent à l'intérieur d'un premier volume partiel (4), chaque creux correspondant à un autre deuxième volume partiel (5) et entourant une zone autour d'une transition entre le premier volume partiel (4) et le deuxième volume partiel (5) correspondant.

9. Dispositif d'affichage selon la revendication 7 ou 8, **caractérisé en ce qu'**au moins deux des deuxièmes volumes partiels (5) sont reliés entre eux de manière fluidique par l'intermédiaire d'un canal.

10. Dispositif d'affichage selon la revendication 1, **caractérisé en ce que** les premiers volumes partiels (4) sont formés entre des cloisons transparentes qui sont maintenues par des structures de soutien à une distance prédéterminée.
